(19) Europäisches Patentamt
European Patent Office
Office européen des brevets

(11) EP 3 693 186 B1

(12) **EUROPEAN PATENT SPECIFICATION**

(45) Date of publication and mention of the grant of the patent:
**24.02.2021 Bulletin 2021/08**

(51) Int Cl.:
***B60C 1/00*** (2006.01) ***C08L 7/00*** (2006.01)

(21) Application number: **20154307.1**

(22) Date of filing: **29.01.2020**

(54) **RUBBER COMPOSITION FOR TIRE AND PNEUMATIC TIRE**

KAUTSCHUKZUSAMMENSETZUNG FÜR REIFEN SOWIE LUFTREIFEN

COMPOSITION DE CAOUTCHOUC POUR PNEUMATIQUE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2019 JP 2019019703**

(43) Date of publication of application:
**12.08.2020 Bulletin 2020/33**

(73) Proprietor: **SUMITOMO RUBBER INDUSTRIES, LTD.**
**Chuo-ku**
**Kobe-shi**
**Hyogo 651-0072 (JP)**

(72) Inventor: **HIMEDA, Shingo**
**Kobe-shi,, Hyogo 651-0072 (JP)**

(74) Representative: **TBK**
**Bavariaring 4-6**
**80336 München (DE)**

(56) References cited:
**WO-A1-2018/105625** **US-A1- 2004 162 382**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 693 186 B1

## Description

BACKGROUND OF THE INVENTION

Field of the Invention

The present invention relates to a rubber composition for a tire and a pneumatic tire.

Description of the Background Art

In recent years, due to the growing interest in environmental issues, the demand for reducing fuel consumption has been increasing for automobiles, so that rubber compositions used for automotive tires have been required to have excellent low fuel consumption performance.

As a method for improving low fuel consumption performance, for example, a method for decreasing the amount of a reinforcing filler has been known. With this method, chip-cut resistance (block chipping resistance) and the like tend to deteriorate due to a reduction in reinforcement performance of a rubber composition, etc. As described above, there is generally a trade-off relationship between these performance characteristics such as low fuel consumption performance and chip-cut resistance, and it is difficult to achieve the respective performance characteristics.

WO 2018/105625 A1 describes a rubber composition for treads, which contains 10-30 parts by mass of a carbon black A that has an iodine adsorption of 130 mg/g or more and 20-50 parts by mass of a carbon black B that has an iodine adsorption of 110 mg/g or more but less than 130 mg/g per 100 parts by mass of a rubber component that contains 25-45% by mass of a styrene-butadiene rubber which has a styrene content of 15% by mass or less and a vinyl content of 30-50% by mole, 45-65% by mass of an isoprene rubber and 5-15% by mass of a butadiene rubber. This rubber composition for treads is configured such that if X (parts by mass) is the content of the carbon black A, the content of the carbon black B is from 0.6X to 4.5X (parts by mass).

SUMMARY OF THE INVENTION

The present invention has been made to solve the above problem, and an object of the present invention is to provide a rubber composition, for a tire, having significantly improved combined performance of low fuel consumption performance and chip-cut resistance, and a pneumatic tire produced using the rubber composition.

The present invention is directed to a rubber composition for a tire, the rubber composition containing an isoprene-based rubber, a butadiene rubber, a styrene-butadiene rubber having a styrene content of 18 to 40% by mass, a carbon black having an iodine adsorption amount not less than 130 mg/g, and silica, wherein an amount of the isoprene-based rubber in 100% by mass of a rubber component is not less than 40% by mass, an amount of the butadiene rubber in 100% by mass of the rubber component is not less than 20% by mass, an amount of the styrene-butadiene rubber in 100% by mass of the rubber component is 1 to 30% by mass, and an amount of the silica per 100 parts by mass of the rubber component is 5 to 60 parts by mass.

Preferably, the styrene-butadiene rubber has a vinyl content not less than 40% by mass. The present invention is also directed to a pneumatic tire produced using the rubber composition.

Preferably, the pneumatic tire is a heavy duty tire.

According to the present invention, since the rubber composition for a tire contains an isoprene-based rubber, a butadiene rubber, a styrene-butadiene rubber having a styrene content of 18 to 40% by mass, a carbon black having an iodine adsorption amount not less than 130 mg/g, and silica in predetermined blending amounts, combined performance of low fuel consumption performance and chip-cut resistance is significantly improved.

DESCRIPTION OF THE PREFERRED EMBODIMENTS

The rubber composition for a tire of the present invention contains an isoprene-based rubber, a butadiene rubber (BR), a styrene-butadiene rubber (SBR) having a styrene content of 18 to 40% by mass, a carbon black having an iodine adsorption amount not less than 130 mg/g, and silica in predetermined blending amounts.

The reason why the aforementioned effect is achieved with the rubber composition is not necessarily clear but is inferred to be achieved by the following effects.

When a small amount of an SBR is dispersed in an isoprene-based rubber/BR-based polymer, a state of three phases of isoprene-based rubber/BR/SBR is obtained. Then, by blending a carbon black having a predetermined iodine adsorption amount and dispersing the carbon black near the boundaries of the respective phases, the connection between each phase is strengthened and a rubber composition capable of absorbing shocks is obtained, so that chip-cut resistance is improved. Meanwhile, due to blending the SBR and the predetermined carbon black, there is a concern

about deterioration of heat generation performance. However, by using an SBR having a specific styrene content as the SBR and blending a predetermined amount of silica, deterioration of heat generation performance is inhibited. It is inferred that the combined performance of low fuel consumption performance and chip-cut resistance is significantly improved by the above functions.

The amount of the isoprene-based rubber in 100% by mass of a rubber component is not less than 40% by mass, preferably not less than 45% by mass, and more preferably not less than 50% by mass. When the amount is set to be not less than the lower limit, good low fuel consumption performance tends to be achieved. The upper limit of the amount is not particularly limited, but the amount is preferably not greater than 70% by mass, more preferably not greater than 65% by mass, and further preferably not greater than 60% by mass. When the amount is set to be not greater than the upper limit, a sufficient SBR amount is ensured, and the combined performance of low fuel consumption performance and chip-cut resistance tends to be significantly improved. In particular, amount of isoprene-based rubber > amount of BR > amount of SBR is preferably satisfied. As a result of setting as such, the effect of the present invention is easily exhibited by the above mechanism. In addition, vinyl group content in SBR (= amount of SBR [% by weight] × vinyl group content [% by weight]) > amount of silica is preferably satisfied. As a result of setting as such, the effect of the present invention is easily exhibited by the above mechanism. Furthermore, amount of carbon > amount of oil, and amount of silica > amount of oil are preferably satisfied. As a result of setting as such, the effect of the present invention is easily exhibited by the above mechanism. All these relational expressions are preferably satisfied.

Examples of the isoprene-based rubber include natural rubber (NR), isoprene rubber (IR), reformed NR, modified NR, and modified IR. As the NR, NRs that are generally used in the tire industry, such as SIR20, RSS#3, and TSR20 can be used. The IR is not particularly limited, and, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

The amount of the BR in 100% by mass of the rubber component is not less than 20% by mass, preferably not less than 25% by mass, and more preferably not less than 30% by mass. When the amount is set to be not less than the lower limit, good low fuel consumption performance tends to be achieved. The upper limit of the amount is not particularly limited, but the amount is preferably not greater than 50% by mass, more preferably not greater than 45% by mass, and further preferably not greater than 40% by mass. When the amount is set to be not greater than the upper limit, a sufficient SBR amount is ensured, and the combined performance of low fuel consumption performance and chip-cut resistance tends to be significantly improved.

The BR is not particularly limited, and a BR having a high cis content, a BR containing syndiotactic polybutadiene crystal, etc., can be used. The BR may be either an unmodified BR or a modified BR. Examples of the modified BR include a modified BR into which a functional group described later is introduced. These BRs may be used individually, or two or more of these BRs may be used in combination. The cis content of the BR is preferably not less than 90% by mass (more preferably not less than 95% by mass) for the reason that wear resistance is improved. The cis content can be measured by infrared absorption spectrometry.

As the BR, for example, products of Ube Industries, Ltd., JSR Corporation, Asahi Kasei Corporation, Zeon Corporation, etc., can be used.

The rubber composition contains an SBR having a styrene content of 18 to 40% by mass, and the styrene content is preferably not less than 20% by mass and more preferably not less than 25% by mass. When the amount is set to be not less than the lower limit, good chip-cut resistance tends to be achieved. In addition, the styrene content is preferably not greater than 38% by mass, more preferably not greater than 35% by mass, and further preferably not greater than 30% by mass. When the amount is set to be not greater than the upper limit, heat generation is reduced, and good low fuel consumption performance tends to be achieved.

The styrene content can be measured by a method described in later-described Examples.

The vinyl content of the SBR is preferably not less than 40% by mass, more preferably not less than 50% by mass, and further preferably not less than 55% by mass. The vinyl content is preferably not greater than 65% by mass and more preferably not greater than 60% by mass. When the vinyl content is set to be within the above range, good chip-cut resistance tends to be achieved.

The vinyl content (1,2-bond butadiene unit content) can be measured by a method described in later-described Examples.

The weight-average molecular weight (Mw) of the SBR is preferably not less than 150 thousand, more preferably not less than 350 thousand, and further preferably not less than 400 thousand. When the amount is set to be not less than the lower limit, good low fuel consumption performance tends to be achieved. The Mw is preferably not greater than 1.1 million, more preferably not greater than 0.9 million, and further preferably not greater than 0.8 million. When the Mw is set to be not greater than the upper limit, good processability tends to be achieved

The Mw can be measured by a method described in later-described Examples.

From the viewpoint of chip-cut resistance, the amount of the SBR having the predetermined styrene content in 100% by mass of the rubber component is not less than 1% by mass, preferably not less than 5% by mass, more preferably not less than 10% by mass, and further preferably not less than 15% by mass. From the viewpoint of low fuel consumption performance, the amount is not greater than 30% by mass, preferably not greater than 25% by mass, more preferably not greater than 22% by mass, and further preferably not greater than 20% by mass.

The SBR is not particularly limited, and, for example, an emulsion-polymerized styrene-butadiene rubber (E-SBR), a solution-polymerized styrene-butadiene rubber (S-SBR), etc., can be used. The SBR may be either an unmodified SBR or a modified SBR.

The modified SBR only needs to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with a C1-C6 alkyl group), an alkoxy group (preferably, a C1-C6 alkoxy group), and an alkoxysilyl group (preferably, a C1-C6 alkoxysilyl group) are preferable.

As the modified SBR, an SBR modified with a compound (modifier) represented by the following formula is particularly suitable.

[Chem. 1]

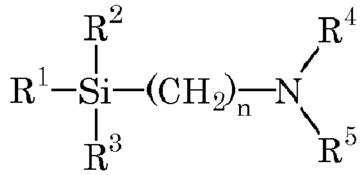

(wherein $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.)

As the modified SBR modified with the compound (modifier) represented by the above formula, an SBR obtained by modifying the polymerization terminals (active terminals) of a solution-polymerized styrene-butadiene rubber (S-SBR) with the compound represented by the above formula (modified SBR disclosed in Japanese Laid-Open Patent Publication No. 2010-111753, etc.) is suitably used.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified SBR, a modified SBR modified with the following compound (modifier) is suitably used. Examples

of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane; (thio)benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified SBRs modified with alkoxysilanes are preferable.

Modification with the above compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

Examples of usable rubber components other than the isoprene-based rubber, the BR, and the SBR include diene-based rubbers such as acrylonitrile butadiene rubber (NBR), chloroprene rubber (CR), isobutylene-isoprene rubber (IIR), and styrene-isoprene-butadiene rubber (SIBR). These diene-based rubbers may be used individually, or two or more of these diene-based rubbers may be used in combination.

The rubber composition contains a carbon black (also referred to as particulate carbon black) having an iodine adsorption amount (IA) not less than 130 mg/g, and, from the viewpoint of chip-cut resistance, the iodine adsorption amount is preferably not less than 140 mg/g and more preferably not less than 150 mg/g. The upper limit of the iodine adsorption amount is not particularly limited, but, from the viewpoint of low fuel consumption performance, the iodine adsorption amount is preferably not greater than 300 mg/g, more preferably not greater than 250 mg/g, and further preferably not greater than 210 mg/g.

The IA is a value measured according to JIS K6217-1: 2008.

The amount of the particulate carbon black per 100 parts by mass of the rubber component is preferably not less than 10 parts by mass, more preferably not less than 20 parts by mass, and further preferably not less than 25 parts by mass. When the amount is set to be not less than the lower limit, sufficient reinforcement performance is achieved, and chip-cut resistance tends to be improved. In addition, the amount is preferably not greater than 60 parts by mass, more preferably not greater than 50 parts by mass, and further preferably not greater than 45 parts by mass. When the amount is set to be not greater than the upper limit, good low fuel consumption performance tends to be achieved.

As the particulate carbon black, SAF, etc., can be used. These carbon blacks may be used individually, or two or more of these carbon blacks may be used in combination.

As the particulate carbon black, for example, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

The rubber composition contains silica, and examples of the silica include dry-process silica (anhydrous silica)

and wet-process silica (hydrous silica). Among them, wet-process silica is preferable for the reason that it has a higher silanol group content.

The amount of the silica per 100 parts by mass of the rubber component is not less than 5 parts by mass and preferably not less than 10 parts by mass. When the amount is set to be not less than the lower limit, good low fuel consumption performance tends to be achieved. The amount is not greater than 60 parts by mass, preferably not greater than 50 parts by mass, more preferably not greater than 40 parts by mass, further preferably not greater than 30 parts by mass, and particularly preferably not greater than 25 parts by mass. When the amount is set to be not greater than the upper limit, good dispersibility tends to be achieved.

The nitrogen adsorption specific surface area ($N_2SA$) of the silica is preferably not less than 40 $m^2/g$, more preferably not less than 70 $m^2/g$, and further preferably not less than 110 $m^2/g$. When the $N_2SA$ of the silica is set to be not less than the lower limit, good low fuel consumption performance tends to be achieved. In addition, the $N_2SA$ of the silica is preferably not greater than 220 $m^2/g$ and more preferably not greater than 200 $m^2/g$. When the amount is set to be not greater than the upper limit, good dispersibility tends to be achieved.

The $N_2SA$ of the silica is a value measured by the BET method according to ASTM D3037-93.

As the silica, for example, products of Degussa, Rhodia, Tosoh Silica Corporation, Solvay Japan, Ltd., Tokuyama Corporation, etc., can be used.

The rubber composition preferably contains a silane coupling agent together with the silica. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as y-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination. Among them, sulfide-based silane coupling agents and mercapto-based silane coupling agents are preferable for the reason that the effect of the present invention is favorably achieved.

As the silane coupling agent, for example, products of Degussa, Momentive, Shin-Etsu Silicones, Tokyo Chemical Industry Co., Ltd., AZmax, Dow Corning Toray Co., Ltd., etc., can be used.

The amount of the silane coupling agent per 100 parts by mass of the silica is preferably not less than 3 parts by mass and more preferably not less than 5 parts by mass. When the amount is not less than 3 parts by mass, an effect due to the addition tends to be achieved. In addition, the amount is preferably not greater than 25 parts by mass and more preferably not greater than 20 parts by mass. When the amount is not greater than 25 parts by mass, an effect corresponding to the blending amount is achieved, and good processability at the time of kneading tends to be achieved.

An inorganic filler and an organic filler other than the silica and the carbon black may be blended in the rubber composition.

Examples of the inorganic filler include talc, aluminum hydroxide, aluminum oxide, magnesium hydroxide, magnesium oxide, magnesium sulfate, titanium white, titanium black, calcium oxide, calcium hydroxide, aluminum magnesium oxide, clay, pyrophyllite, bentonite, aluminum silicate, magnesium silicate, calcium silicate, aluminum calcium silicate, magnesium silicate, silicon carbide, zirconium, and zirconium oxide. Examples of the organic filler include cellulose nanofiber. These fillers may be used individually, or two or more of these fillers may be used in combination.

From the viewpoint of the combined performance of low fuel consumption performance and chip-cut resistance, the total amount of the fillers (the aforementioned particulate carbon black, silica, the inorganic filler and the organic filler other than those, etc.) per 100 parts by mass of the rubber component is preferably 30 to 120 parts by mass, more preferably 40 to 100 parts by mass, and further preferably 50 to 80 parts by mass.

The rubber composition preferably contains an oil as a softener.

The amount of the oil per 100 parts by mass of the rubber component is preferably not less than 1.0 part by mass and more preferably not less than 2.0 parts by mass. Regarding the upper limit of the amount, the amount is preferably not greater than 10.0 parts by mass and more preferably not greater than 8.0 parts by mass.

The amount of the oil also includes the amount of oil contained in rubber (oil-extended rubber).

Examples of the oil include process oils, vegetable fats and oils, and mixtures thereof. As the process oil, for example, paraffinic process oil, aromatic process oil, or naphthenic process oil can be used. Examples of the vegetable fats and oils include castor oil, cotton seed oil, linseed oil, rapeseed oil, soybean oil, palm oil, coconut oil, peanut oil,

rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination. Among them, naphthenic process oil is preferable for the reason that the effect of the present invention is favorably achieved.

As the oil, for example, products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., FUJI KOSAN COMPANY, LTD., etc., can be used.

A liquid diene-based polymer may be blended as a softener in the rubber composition. The liquid diene-based polymer is a diene-based polymer in liquid form at normal temperature (25°C). The weight-average molecular weight (Mw) of the liquid diene-based polymer, which is measured by gel permeation chromatography (GPC) in terms of polystyrene, is preferably $1.0\times10^3$ to $2.0\times10^5$ and more preferably $3.0\times10^3$ to $1.5\times10^4$. Examples of the liquid diene-based polymer include liquid styrene-butadiene copolymers (liquid SBRs), liquid butadiene polymers (liquid BRs), liquid isoprene polymers (liquid IRs), and liquid styrene isoprene copolymers (liquid SIRs).

In the case where softeners (a liquid diene-based polymer, a hydrocarbon in liquid form at normal temperature (25°C) such as an oil, a resin, etc.) are blended in the rubber composition, from the viewpoint of the combined performance of low fuel consumption performance and chip-cut resistance, the total amount of the softeners per 100 parts by mass of the rubber component is preferably 1 to 30 parts by mass, more preferably 1 to 15 parts by mass, and further preferably 3 to 10 parts by mass.

Resins in solid form at normal temperature (25°C) may be blended in the rubber composition. The total amount of the resins (resins in solid form at normal temperature (25°C) such as styrene-based resins described later) per 100 parts by mass of the rubber component in the rubber composition is preferably 1 to 10 parts by mass and more preferably 3 to 5 parts by mass.

The resins (resins in solid form at normal temperature) are not particularly limited as long as they are resins generally used in the tire industry, and examples of the resins include styrene-based resins, coumarone-indene resins, terpene-based resins, p-t-butylphenol acetylene resins, and acrylic-based resins.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, $\alpha$-methyl styrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; $\alpha$, $\beta$-unsaturated carboxylic acids or acid anhydrides thereof such as maleic anhydride

Among them, from the viewpoint of the combined performance of low fuel consumption performance and chip-cut resistance, $\alpha$-methylstyrene-based resins ($\alpha$-methylstyrene homopolymers, copolymers of $\alpha$-methylstyrene and styrene, etc.) are preferable.

The softening point of the styrene-based resin is preferably not lower than 30°C, more preferably not lower than 60°C, and further preferably not lower than 80°C. When the softening point is not lower than 30°C, desired wet grip performance tends to be achieved. In addition, the softening point is preferably not higher than 160°C, more preferably not higher than 130°C, and further preferably not higher than 100°C. When the softening point is not higher than 160°C, the dispersibility of the resin becomes good, and wet grip performance and low fuel consumption performance tend to be improved.

In the present invention, the softening point of the resin is a softening point that is measured with a ring and ball softening point measuring device according to JIS K6220-1: 2001 and that is a temperature at which a ball has descended.

The coumarone-indene resins are each a resin containing coumarone and indene as monomer components that form the skeleton (main chain) of the resin. Examples of the monomer components contained in the skeleton other than coumarone and indene include styrene, $\alpha$-methylstyrene, methylindene, and vinyltoluene.

Examples of the terpene-based resins include polyterpenes, terpene phenols, and aromatic modified terpene resins.

The polyterpenes are resins obtained by polymerizing terpene compounds, and hydrogenated products thereof. The above terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$). Examples of the terpene compounds include $\alpha$-pinene, $\beta$-pinene, dipentene, limonene,

myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol.

Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

Examples of the p-t-butylphenol acetylene resins include resins obtained by condensation reaction of p-t-butylphenol and acetylene.

The acrylic-based resins are not particularly limited, and a non-solvent type acrylic-based resin can be suitably used since a resin containing less impurities and having a sharp molecular weight distribution is obtained.

Examples of the non-solvent type acrylic-based resin include a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual search report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present invention, (meth)acrylic means methacrylic and acrylic.

The acrylic-based resin preferably does not substantially contain a polymerization initiator, a chain transfer agent, an organic solvent, etc., which are sub-materials. In addition, the acrylic-based resin is preferably a resin that is obtained by continuous polymerization and has a relatively narrow composition distribution and a relatively narrow molecular weight distribution.

As described above, the acrylic-based resin is preferably a resin that does not substantially contain a polymerization initiator, a chain transfer agent, an organic solvent, etc., which are sub-materials, that is, a resin having a high purity. The purity of the acrylic-based resin (the proportion of resin contained in the said resin) is preferably not less than 95% by mass and more preferably not less than 97% by mass.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component.

In addition, the acrylic-based resin may have a hydroxyl group, a carboxyl group, or a silanol group.

As the resins (resins in solid form at normal temperature), for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

The rubber composition preferably contains a wax.

From the viewpoint of the combined performance of low fuel consumption performance and chip-cut resistance, the amount of the wax per 100 parts by mass of the rubber component is preferably 1 to 20 parts by mass and more preferably 1.5 to 10 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, and propylene. These waxes may be used individually, or two or more of these waxes may be used in combination. Among them, petroleum waxes are preferable, and paraffin wax is more preferable.

As the wax, for example, products of Ouchi Shinko Chemical Industrial Co., Ltd., NIPPON SEIRO CO., LTD., Seiko Chemical Co., Ltd., etc., can be used.

The rubber composition preferably contains an antioxidant.

From the viewpoint of the combined performance of low fuel consumption performance and chip-cut resistance, the amount of the antioxidant per 100 parts by mass of the rubber component is preferably 1 to 10 parts by mass and more preferably 2 to 7 parts by mass.

Examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. These antioxidants may be used individually, or two or more of these antioxidants may be used in combination. Among them, the p-phenylenediamine antioxidants and the quinoline-based antioxidants are preferable, and N-(1,3-dimethylbutyl)-N'-phenyl-p-phenylenediamine and a polymer of 2,2,4-trimethyl-1,2-dihydroquinoline are more preferable.

As the antioxidant, for example, products of Seiko Chemical Co., Ltd., Sumitomo Chemical Co., Ltd., Ouchi Shinko Chemical Industrial Co., Ltd., Flexsys, etc., can be used.

The rubber composition preferably contains stearic acid. From the viewpoint of the combined performance of low fuel consumption performance and chip-cut resistance, the amount of the stearic acid per 100 parts by mass of the rubber component is preferably 0.5 to 10 parts by mass and more preferably 1 to 5 parts by mass.

As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

The rubber composition preferably contains zinc oxide. The amount of the zinc oxide per 100 parts by mass of the rubber component is preferably 0.5 to 10 parts by mass and more preferably 1 to 5 parts by mass.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The rubber composition preferably contains sulfur. From the viewpoint of the combined performance of low fuel consumption performance and chip-cut resistance, the amount of the sulfur per 100 parts by mass of the rubber component is preferably 0.5 to 10 parts by mass, more preferably 1 to 5 parts by mass, and further preferably 1 to 3 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The rubber composition preferably contains a vulcanization accelerator. From the viewpoint of the combined performance of low fuel consumption performance and chip-cut resistance, the amount of the vulcanization accelerator per 100 parts by mass of the rubber component is preferably 0.3 to 5.0 parts by mass, more preferably 0.5 to 3.0 parts by mass, and further preferably 0.7 to 2.5 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, from the viewpoint of the combined performance of low fuel consumption performance and chip-cut resistance, sulfenamide-based vulcanization accelerators and guanidine-based vulcanization accelerators are preferable.

An organic crosslinking agent may be blended in the rubber composition.

The organic crosslinking agent is not particularly limited, and examples of the organic crosslinking agent include maleimide compounds, alkylphenol-sulfur chloride condensates, organic peroxides, and amine organic sulfides. These organic crosslinking agents may be used individually, two or more of these organic crosslinking agents may be used in combination, or these organic crosslinking agents may be used together with sulfur. The organic crosslinking agent is blended, for example, in an amount not greater than 10 parts by mass per 100 parts by mass of the rubber component.

The rubber composition is produced by a general method. Specifically, for example, the rubber composition can be produced by a method in which the above respective components are kneaded using a Banbury mixer, a kneader, or an open roll, and then vulcanization is performed.

As for the kneading conditions, in a base kneading step of kneading the additives other than a vulcanizing agent and the vulcanization accelerator, the kneading temperature is normally 50 to 200°C and preferably 80 to 190°C, and the kneading time is normally 30 seconds to 30 minutes and preferably 1 minute to 30 minutes. In a finish kneading step of kneading the vulcanizing agent and the vulcanization accelerator, the kneading temperature is normally not higher than 100°C and preferably room temperature to 80°C. In addition, a composition obtained by kneading the vulcanizing agent and the vulcanization accelerator is normally subjected to vulcanization processing such as press vulcanization. The vulcanization temperature is normally 120 to 200°C and preferably 140 to 180°C.
The rubber composition of the present invention is suitably used for treads (cap treads) and sidewalls, but may be used for other members, for example, for base treads, under treads, clinch apexes, bead apexes, breaker cushion rubbers, carcass cord covering rubbers, insulations, chafers, inner liners, etc., and side reinforcing layers of run flat tires.
The pneumatic tire of the present invention is produced by a normal method using the above rubber composition. Specifically, an unvulcanized tire is formed by extruding a rubber composition obtained by blending the above components, in an unvulcanized state so as to correspond to the shape of each tire member such as a tread, and forming the extruded rubber composition together with other tire members on a tire forming machine by a general method. A tire is obtained by heating and pressurizing the unvulcanized tire in a vulcanizing machine.
The pneumatic tire is suitably used as a tire for a passenger car, a heavy duty tire for a truck or a bus, a tire for a motorcycle, a tire for racing, etc., and is particularly suitably used as a heavy duty tire.

EXAMPLES

The present invention will be specifically described by means of examples, but the present invention is not limited to these examples.
Various chemicals used in the examples are collectively described below.

NR: TSR20
SBR 1-1: Production Example 1-1
SBR 1-2: Production Example 1-2
SBR 2: Modified SBR (styrene content: 10% by mass, vinyl content: 40% by mass, Mw: $60\times10^4$)
BR: BR150B (cis content: 98% by mass) manufactured by Ube Industries, Ltd.
Carbon black 1-1: IA 135 mg/g
Carbon black 1-2: IA 160 mg/g
Carbon black 2: SHOBLACK N220 (IA: 118 mg/g) manufactured by Cabot Japan K.K.
Silica: ULTRASIL VN3 ($N_2SA$: 175 $m^2/g$) manufactured by Degussa
Wax: OZOACE 0355 manufactured by NIPPON SEIRO CO., LTD.
Antioxidant: NOCRAC 6C (N-phenyl-N'-(1,3-dimethylbutyl)-p-phenylenediamine) (6PPD) manufactured by Ouchi Shinko Chemical Industrial Co., Ltd.
Stearic acid: bead stearic acid, Tsubaki, manufactured by NOF Corporation
Zinc oxide: Zinc Oxide Type-2 manufactured by Mitsui Mining & Smelting Co., Ltd.
Silane coupling agent: Si69 (bis(3-triethoxysilylpropyl)tetrasulfide) manufactured by Degussa
Oil: TDAE oil manufactured by JXTG Nippon Oil & Energy Corporation
Sulfur: powdery sulfur manufactured by Tsurumi Chemical Industry Co., Ltd.
Vulcanization accelerator 1: NOCCELER NS (N-tert-butyl-2-benzothiazolyl sulfenamide) manufactured by Ouchi Shinko Chemical Industrial Co., Ltd.
Vulcanization accelerator 2: NOCCELER D (N, N'-diphenylguanidine) manufactured by Ouchi Shinko Chemical Industrial Co., Ltd.

(Production Example 1-1)

Under a nitrogen atmosphere, 3-dimethylaminopropyltrimethoxysilane was put into a 100-ml volumetric flask, and anhydrous hexane was further added to produce a terminal modifier.
n-Hexane, styrene, butadiene, and tetramethylethylenediamine were added to a pressure-resistant container sufficiently purged with nitrogen, and the temperature of the mixture was increased to 40°C. Next, butyllithium was added to the mixture, then the temperature of the mixture was increased to 50°C, and the mixture was stirred. Next, a silicon tetrachloride/hexane solution was added to the mixture, and the mixture was stirred. Next, the terminal modifier was added to the mixture, and the mixture was stirred. Methanol in which 2,6-tert-butyl-p-cresol had been dissolved was added to the reaction solution, and then the reaction solution was put into a stainless-steel vessel containing methanol to collect aggregates. The obtained aggregates were dried under reduced pressure for 24 hours to obtain SBR 1-1. The obtained SBR 1-1 had a styrene content of 27% by mass, a vinyl content of 57% by mass, and Mw of $40\times10^4$.

(Production Example 1-2)

Under a nitrogen atmosphere, 3-diethylaminopropyltrimethoxysilane was put into a 100-ml volumetric flask, and anhydrous hexane was further added to produce a terminal modifier.

n-Hexane, styrene, butadiene, and tetramethylethylenediamine were added to a pressure-resistant container sufficiently purged with nitrogen, and the temperature of the mixture was increased to 40°C. Next, butyllithium was added to the mixture, then the temperature of the mixture was increased to 50°C, and the mixture was stirred. Next, a silicon tetrachloride/hexane solution was added to the mixture, and the mixture was stirred. Next, the terminal modifier was added to the mixture, and the mixture was stirred. Methanol in which 2,6-tert-butyl-p-cresol had been dissolved was added to the reaction solution, and then the reaction solution was put into a stainless-steel vessel containing methanol to collect aggregates. The obtained aggregates were dried under reduced pressure for 24 hours to obtain SBR 1-2. The obtained SBR 1-2 had a styrene content of 20% by mass, a vinyl content of 55% by mass, and Mw of $50\times10^4$.

<SBR Analysis>

SBR analysis was performed by the following methods.

(Measurement of Weight-Average Molecular Weight Mw)

The weight-average molecular weight Mw of a polymer was determined as a value obtained by conversion, based on polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

(Structure Identification)

SBR structure identification (measurement of styrene content and vinyl content) was performed using a JNM-ECA series device manufactured by JEOL Ltd. The measurement was performed by dissolving 0.1 g of a polymer in 15 ml of toluene, slowly pouring the solution into 30 ml of methanol to reprecipitate the polymer, drying the precipitated polymer under reduced pressure, and measuring the dried polymer.

<Examples and Comparative Examples>

In accordance with each of the blending contents shown in each table, the materials other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized rubber composition. The obtained unvulcanized rubber composition was formed into the shape of a tread, and attached together with other tire members on a tire forming machine to form an unvulcanized tire. The unvulcanized tire was vulcanized at 150°C for 35 minutes to produce a test heavy-duty tire (size: 11R22.5).

<Evaluation Items and Test Methods>

The obtained test tires were evaluated as follows, and the combined performance of chip-cut resistance and low fuel consumption performance is also shown. The results are shown in each table. References in Tables 1 to 4 are Comparative Examples 1-3, 2-3, 3-3, and 1-3, respectively.

(Block Chipping Resistance (Chip-Cut Resistance))

Each type of test tire was mounted to all the wheels of a vehicle (truck), the vehicle was driven for a distance of 8000 km, and then a block chipping state was visually checked and scored. The results are shown as an index obtained by the following calculation equation, with the score of the corresponding reference comparative example being regarded as 100. A higher index indicates that less block chipping occurs and the block chipping resistance is higher. If the index is not less than 70, there is no problem in terms of practical use.

(Block chipping resistance index) = (score of each blending example) / (score of reference comparative example) × 100

(Low Fuel Consumption Performance Index)

Using a test piece cut out from the tread portion a test tire, tan8 of the test piece was measured at a dynamic strain amplitude of 1%, a frequency of 10 Hz, and a temperature of 50°C with a spectrometer manufactured by Ueshima Seisakusho Co., Ltd. A value of the inverse of tanδ is shown as an index with the value of the corresponding reference comparative example being regarded as 100. A higher value indicates that the rolling resistance is lower and the low fuel consumption performance is better.

[Table 1]

| | | Example | | Comparative Example | | |
|---|---|---|---|---|---|---|
| | | 1-1 | 1-2 | 1-1 | 1-2 | 1-3 |
| Blending amount (parts by mass) | NR | 50 | 50 | 50 | 50 | 50 |
| | SBR 1-1 (styrene: 27, vinyl: 57, Mw: 400 thousand) | 20 | 20 | | 20 | 20 |
| | SBR 2 (styrene: 10, vinyl: 40, Mw: 600 thousand) | | | 20 | | |
| | BR | 30 | 30 | 30 | 30 | 30 |
| | Carbon black 1-1 | 35 | 40 | 35 | | 50 |
| | Carbon black 2 | | | | 35 | |
| | Silica | 20 | 10 | 20 | 20 | |
| | Wax | 1.0 | 1.0 | 1.0 | 1.0 | 1.0 |
| | Antioxidant | 2.0 | 2.0 | 2.0 | 2.0 | 2.0 |
| | Stearic acid | 2.0 | 2.0 | 2.0 | 2.0 | 2.0 |
| | Zinc oxide | 4.0 | 4.0 | 4.0 | 4.0 | 4.0 |
| | Silane coupling agent | 1.6 | 1.6 | 1.6 | 1.6 | 1.6 |
| | Oil | 3.0 | 3.0 | 3.0 | 3.0 | 3.0 |
| | Sulfur | 1.5 | 1.5 | 1.5 | 1.5 | 1.5 |
| | Vulcanization accelerator 1 | 0.5 | 0.5 | 0.5 | 0.5 | 0.5 |
| | Vulcanization accelerator 2 | 1.5 | 1.5 | 1.5 | 1.5 | 1.5 |
| Evaluation | (a) Chip-cut resistance index | 80 | 95 | 58 | 50 | 100 |
| | (b) Low fuel consumption performance index | 128 | 120 | 138 | 140 | 100 |
| | Combined performance (=(a)+(b)) | 208 | 215 | 196 | 190 | 200 |

[Table 2]

| | | Example | | Comparative Example | | |
|---|---|---|---|---|---|---|
| | | 2-1 | 2-2 | 2-1 | 2-2 | 2-3 |
| Blending amount (parts by mass) | NR | 50 | 50 | 50 | 50 | 50 |
| | SBR 1-2 (styrene: 20, vinyl: 55, Mw: 500 thousand) | 20 | 20 | | 20 | 20 |
| | SBR 2 (styrene: 10, vinyl: 40, Mw: 600 thousand) | | | 20 | | |
| | BR | 30 | 30 | 30 | 30 | 30 |
| | Carbon black 1-2 | 35 | 40 | 35 | | 50 |
| | Carbon black 2 | | | | 35 | |
| | Silica | 20 | 10 | 20 | 20 | |
| | Wax | 1.0 | 1.0 | 1.0 | 1.0 | 1.0 |
| | Antioxidant | 2.0 | 2.0 | 2.0 | 2.0 | 2.0 |
| | Stearic acid | 2.0 | 2.0 | 2.0 | 2.0 | 2.0 |
| | Zinc oxide | 4.0 | 4.0 | 4.0 | 4.0 | 4.0 |
| | Silane coupling agent | 1.6 | 1.6 | 1.6 | 1.6 | 1.6 |
| | Oil | 3.0 | 3.0 | 3.0 | 3.0 | 3.0 |
| | Sulfur | 1.5 | 1.5 | 1.5 | 1.5 | 1.5 |
| | Vulcanization accelerator 1 | 0.5 | 0.5 | 0.5 | 0.5 | 0.5 |
| | Vulcanization accelerator 2 | 1.5 | 1.5 | 1.5 | 1.5 | 1.5 |
| Evaluation | (a) Chip-cut resistance index | 90 | 95 | 63 | 45 | 100 |
| | (b) Low fuel consumption performance index | 125 | 118 | 120 | 144 | 100 |
| | Combined performance (=(a)+(b)) | 215 | 213 | 183 | 189 | 200 |

[Table 3]

| | | Example | | Comparative Example | | |
|---|---|---|---|---|---|---|
| | | 3-1 | 3-2 | 3-1 | 3-2 | 3-3 |
| Blending amount (parts by mass) | NR | 55 | 55 | 55 | 55 | 55 |
| | SBR 1-1 (styrene: 27, vinyl: 57, Mw: 400 thousand) | 10 | 10 | | 10 | 10 |
| | SBR 2 (styrene: 10, vinyl: 40, Mw: 600 thousand) | | | 10 | | |
| | BR | 35 | 35 | 35 | 35 | 35 |
| | Carbon black 1-1 | 35 | 40 | 35 | | 50 |
| | Carbon black 2 | | | | 35 | |
| | Silica | 20 | 10 | 20 | 20 | |
| | Wax | 1.0 | 1.0 | 1.0 | 1.0 | 1.0 |
| | Antioxidant | 2.0 | 2.0 | 2.0 | 2.0 | 2.0 |
| | Stearic acid | 2.0 | 2.0 | 2.0 | 2.0 | 2.0 |
| | Zinc oxide | 4.0 | 4.0 | 4.0 | 4.0 | 4.0 |
| | Silane coupling agent | 1.6 | 1.6 | 1.6 | 1.6 | 1.6 |
| | Oil | 3.0 | 3.0 | 3.0 | 3.0 | 3.0 |
| | Sulfur | 1.5 | 1.5 | 1.5 | 1.5 | 1.5 |
| | Vulcanization accelerator 1 | 0.5 | 0.5 | 0.5 | 0.5 | 0.5 |
| | Vulcanization accelerator 2 | 1.5 | 1.5 | 1.5 | 1.5 | 1.5 |
| Evaluation | (a) Chip-cut resistance index | 70 | 83 | 48 | 40 | 100 |
| | (b) Low fuel consumption performance index | 140 | 135 | 145 | 148 | 100 |
| | Combined performance (=(a)+(b)) | 210 | 218 | 193 | 188 | 200 |

[Table 4]

| | | Example | Comparative Example | Comparative Example | Comparative Example |
|---|---|---|---|---|---|
| | | 1-1 | 1-1 | 1-2 | 1-4 |
| Blending amount (parts by mass) | NR | 50 | 50 | 50 | 50 |
| | SBR 1-1 (styrene: 27, vinyl: 57, Mw: 400 thousand) | 20 | | 20 | |
| | SBR 2 (styrene: 10, vinyl: 40, Mw: 600 thousand) | | 20 | | 20 |
| | BR | 30 | 30 | 30 | 30 |
| | Carbon black 1-1 | 35 | 35 | | |
| | Carbon black 2 | | | 35 | 35 |
| | Silica | 20 | 20 | 20 | 20 |
| | Wax | 1.0 | 1.0 | 1.0 | 1.0 |
| | Antioxidant | 2.0 | 2.0 | 2.0 | 2.0 |
| | Stearic acid | 2.0 | 2.0 | 2.0 | 2.0 |
| | Zinc oxide | 4.0 | 4.0 | 4.0 | 4.0 |
| | Silane coupling agent | 1.6 | 1.6 | 1.6 | 1.6 |
| | Oil | 3.0 | 3.0 | 3.0 | 3.0 |
| | Sulfur | 1.5 | 1.5 | 1.5 | 1.5 |
| | Vulcanization accelerator 1 | 0.5 | 0.5 | 0.5 | 0.5 |
| | Vulcanization accelerator 2 | 1.5 | 1.5 | 1.5 | 1.5 |
| Evaluation | (a) Chip-cut resistance index | 80 | 58 | 50 | 40 |
| | (b) Low fuel consumption performance index | 128 | 138 | 140 | 145 |
| | Combined performance (=(a)+(b)) | 208 | 196 | 190 | 185 |

Tables 1 to 3 demonstrate that, in the Examples in which an isoprene-based rubber, a BR, an SBR having a styrene content of 18 to 40% by mass, a carbon black having an iodine adsorption amount not less than 130 mg/g, and silica were contained in predetermined blending amounts, good combined performance of low fuel consumption performance and chip-cut resistance (block chipping resistance) was achieved as compared to that in the Comparative Examples with blending formulas in which the predetermined SBR of the present application was not contained, blending formulas in which the predetermined carbon black of the present application was not used, etc. In addition, Table 4 demonstrates that, in the case of adding the predetermined SBR of the present application in a blending formula containing the predetermined carbon black of the present application (iodine adsorption amount not less than 130 mg/g), the combined performance was significantly improved and synergistically improved, as compared to that in the case of adding the predetermined SBR of the present application in a blending formula containing a carbon black different from the predetermined carbon black of the present application.

Provided are a rubber composition, for a tire, having significantly improved combined performance of low fuel consumption performance and chip-cut resistance, and a pneumatic tire produced using the rubber composition. The rubber composition for a tire contains an isoprene-based rubber, a butadiene rubber, a styrene-butadiene rubber having a styrene content of 18 to 40% by mass, a carbon black having an iodine adsorption amount not less than 130 mg/g, and silica. In 100% by mass of a rubber component, an amount of the isoprene-based rubber is not less than 40% by mass, an amount of the butadiene rubber is not less than 20% by mass, and an amount of the styrene-butadiene rubber is 1 to 30% by mass. An amount of the silica per 100 parts by mass of the rubber component is 5 to 60 parts by mass.

## Claims

1. A rubber composition for a tire, the rubber composition containing an isoprene-based rubber, a butadiene rubber, a styrene-butadiene rubber having a styrene content of 18 to 40% by mass, a carbon black having an iodine

adsorption amount, measured according to JIS K6217-1: 2008, of not less than 130 mg/g, and silica, wherein

an amount of the isoprene-based rubber in 100% by mass of a rubber component is not less than 40% by mass, an amount of the butadiene rubber in 100% by mass of the rubber component is not less than 20% by mass, and an amount of the styrene-butadiene rubber in 100% by mass of the rubber component is 1 to 30% by mass, and
an amount of the silica per 100 parts by mass of the rubber component is 5 to 60 parts by mass.

**2.** The rubber composition for a tire according to claim 1, wherein the styrene-butadiene rubber has a vinyl content not less than 40% by mass.

**3.** A pneumatic tire produced using the rubber composition according to claim 1 or 2.

**4.** The pneumatic tire according to claim 3 being a heavy duty tire.

## Patentansprüche

**1.** Kautschukzusammensetzung für einen Reifen, wobei die Kautschukzusammensetzung einen Isopren-basierten Kautschuk, einen Butadien-Kautschuk, einen Styrol-Butadien-Kautschuk mit einem Styrolgehalt von 18 bis 40 Gewichts-%, ein Carbon Black mit einer Iod-Adsorptionsmenge, gemessen gemäß JIS K6217-1: 2008, von nicht weniger als 130 mg/g, und Silica enthält, wobei

eine Menge des Isopren-basierten Kautschuks in 100 Gewichts-% einer Kautschukkomponente nicht weniger als 40 Gewichts-% ist, eine Menge des Butadien-Kautschuks in 100 Gewichts-% der Kautschukkomponente nicht weniger als 20 Gewichts-% ist, und eine Menge des Styrol-Butadien-Kautschuks in 100 Gewichts-% der Kautschukkomponente 1 bis 30 Gewichts-% ist, und
eine Menge des Silicas pro 100 Gewichtsteilen der Kautschukkomponente 5 bis 60 Gewichtsteile ist.

**2.** Kautschukzusammensetzung für einen Reifen gemäß Anspruch 1, wobei der Styrol-Butadien-Kautschuk einen Vinylgehalt von nicht weniger als 40 Gewichts-% aufweist.

**3.** Pneumatischer Reifen hergestellt durch Verwenden der Kautschukzusammensetzung gemäß Anspruch 1 oder 2.

**4.** Pneumatischer Reifen gemäß Anspruch 3, der ein Schwerlastreifen ist.

## Revendications

**1.** Composition de caoutchouc pour un pneu, la composition de caoutchouc contenant un caoutchouc à base d'isoprène, un caoutchouc de butadiène, un caoutchouc de styrène-butadiène ayant une teneur en styrène de 18 à 40 % en masse, un noir de carbone ayant une quantité d'adsorption d'iode, mesurée conformément à la norme JIS K6217-1:2008, non inférieure à 130 mg/g, et de la silice, dans laquelle
la quantité du caoutchouc à base d'isoprène dans 100 % en masse de composant caoutchouc n'est pas inférieure à 40 % en masse, la quantité du caoutchouc de butadiène dans 100 % en masse de composant caoutchouc n'est pas inférieure à 20 % en masse, et la quantité du caoutchouc de styrène-butadiène dans 100 % en masse de composant caoutchouc est de 1 à 30 % en masse, et
la quantité de la silice pour 100 parties en masse de composant caoutchouc est de 5 à 60 parties en masse.

**2.** Composition de caoutchouc pour un pneu selon la revendication 1, dans laquelle le caoutchouc de styrène-butadiène a une teneur en vinyle non inférieure à 40 % en masse.

**3.** Pneu produit par utilisation de la composition de caoutchouc de la revendication 1 ou 2.

**4.** Pneu selon la revendication 3, qui est un pneu pour charges lourdes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018105625 A1
- JP 2010111753 A
- US 4414370 A
- JP S596207 B
- JP H558005 B
- JP H1313522 B
- US 5010166 A